# EUROPEAN PATENT APPLICATION

(11) **EP 4 741 874 A1**
(43) Date of publication of application: **13.05.2026**
(21) Application number: 25213996.9
(22) Date of filing: 06.11.2025
(51) Int. Cl.: G01S 13/04, G01S 13/56, G01S 13/88, F16P 3/14, G08B 21/22, B65G 69/28

(54) **METHOD AND SYSTEM FOR MONITORING AN OPENING FOR LOADING/UNLOADING CARGO**

(30) Priority: 08.11.2024 IT 202400025185
(71) Applicant: Inxpect S.p.A., 25131 Brescia (BS) (IT)
(72) Inventor: Muzaka, Alban, 25131 Brescia BS (IT)
(74) Representative: Perani & Partners S.p.A.

(57) **Abstract**

A method for monitoring an opening (200) for freight vehicles (300) comprises arranging a radar system (110) at an opening (200) for access to a cargo loading/unloading station (210) by a freight vehicle (300), monitoring, by means of the radar system (110), two detection regions (112a, 112b) in an area in front of the opening (200) or within the opening (200), which are an upper region (112a), which is at a height such as not to be invaded by a human target standing on a floor, and a lower region (112b), which comprises at least a main portion located below the upper region (112a). Upon detection of a target in the lower region alone (112b), generating an opening alarm indicating that the target is not authorized to access the opening (200). Upon detection of a target in the upper region (112a), inhibiting generation of the opening alarm.

## Description

### Technical field

The present invention is developed in the technical field of safety in work environments, in particular for the loading and unloading of cargo from vehicles such as trucks and forklifts.

### Background of the invention

In logistics, various types of cargo are stored, which are periodically loaded and unloaded by special transport vehicles. For this purpose, the logistics are provided with loading bays, i.e. loading/unloading stations for cargo from a truck, or from a trailer of a truck, which have an appropriately sized opening facing the outside of the building.

Within logistics, cargo is loaded and unloaded by forklifts, at other types of loading/unloading stations.

Both types of stations can be partially or fully automated, for example with vertical mobile platforms to align to the height of a vehicle shelf and/or the load to be handled, and possibly with automatic members for gripping, transporting, and releasing loads, preventing them from accumulating in a disorderly manner.

Sometimes, the level of automation may be such as to activate the loading and unloading members automatically when it is recognized that a cargo vehicle has approached appropriately.

Such platforms or automated members can be hazardous for a person who gets too close while the device or platform is in motion. It would therefore be desirable to provide safety measures that detect and signal the approach of a person, so as to prevent the opening from opening, or hazardous parts from moving, or at least to give a prompt warning of the danger.

### Summary of the invention

The purpose of the present invention is to automatically monitor an area of an access opening to a cargo loading/unloading station by a vehicle, so as to easily distinguish a normal condition, such as the approach of a vehicle to the opening, from a hazardous situation, such as the approach of a person to the opening.

This and other purposes are achieved by a method and apparatus for monitoring an opening for loading/unloading cargo, according to any of the appended claims.

According to the invention, a radar system is positioned at the access opening of the loading/unloading station. The radar system monitors two detection regions in an area in front of the opening, or within the opening, which are an upper region, which is at a height such as not to be invaded by a human target standing on a floor, and a lower region. Upon detection of a target in the lower region only, an opening alarm is generated, indicating that the target is not authorized to access the opening. If, on the other hand, a target is detected in the upper region, without previous opening alarms already being active, the generation of the opening alarm is inhibited, and therefore the target can reach the opening, crossing the lower region, without triggering the opening alarm.

Advantageously, a human operator approaching the opening is detected only in the lower area, and thus triggers the alarm, as a hazardous condition occurs. On the other hand, a cargo vehicle, such as a truck, truck trailer, or forklift, is tall enough to invade the upper region as well, and can therefore reach the opening without triggering the alarm. In other words, the radar system makes it possible to distinguish between the operator and a vehicle based on whether or not the region is impinged on.

Further features and advantages of the invention will be recognisable by a person skilled in the art from the following detailed description of exemplary embodiments of the invention.

### Brief Description of the figures

For a better understanding of the following detailed description, some embodiments of the invention are illustrated in the accompanying drawings, wherein:
- Figure 1 shows a perspective view of an opening for access to a station for loading/unloading cargo from a truck, provided with a system for monitoring the opening according to one embodiment of the invention, and
- Figures 2 and 3 show perspective views of an opening for access to a station for loading/unloading cargo by a forklift, provided with a system for monitoring the opening according to another embodiment of the invention.

### DETAILED DESCRIPTION

The figures illustrate examples of a system for monitoring an opening for the loading/unloading of cargo, according to some embodiments of the invention, indicated overall with the number 100.

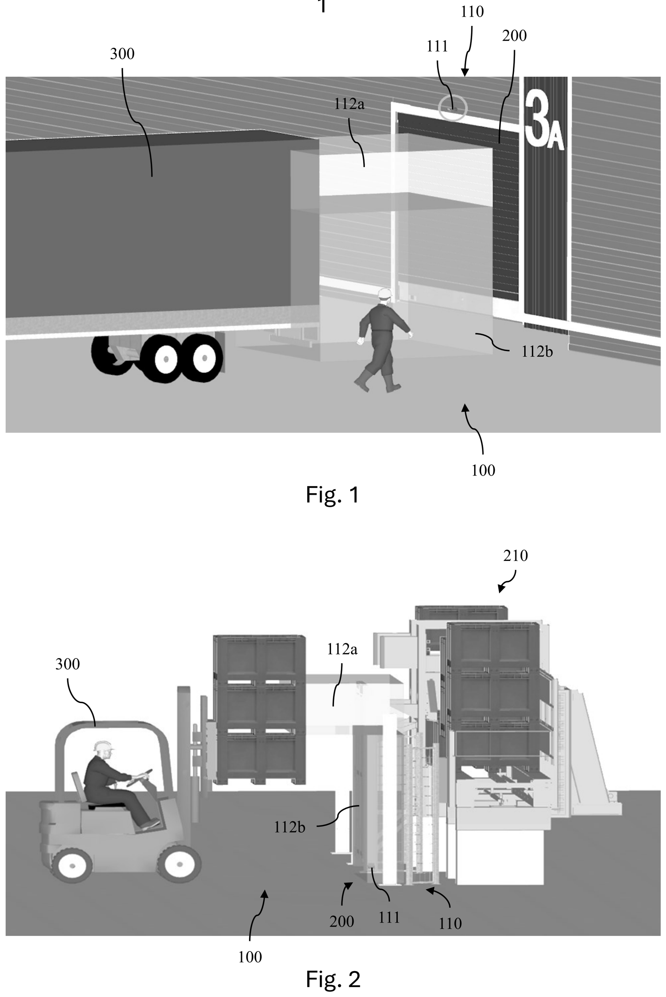

In a known manner, the opening 200 is an opening for access to a station for cargo loading/unloading 210 by a freight vehicle 300. In one embodiment, shown in Figure 1, the loading/unloading station 210 is a loading bay, and the opening 200 is an opening formed through an exterior wall of a building. In more detail, the opening 200 has a shape and dimensions substantially corresponding to those of a back of a vehicle 300 for the transport of cargo, such as a truck (or a trailer of a truck), so that their edges can overlap.

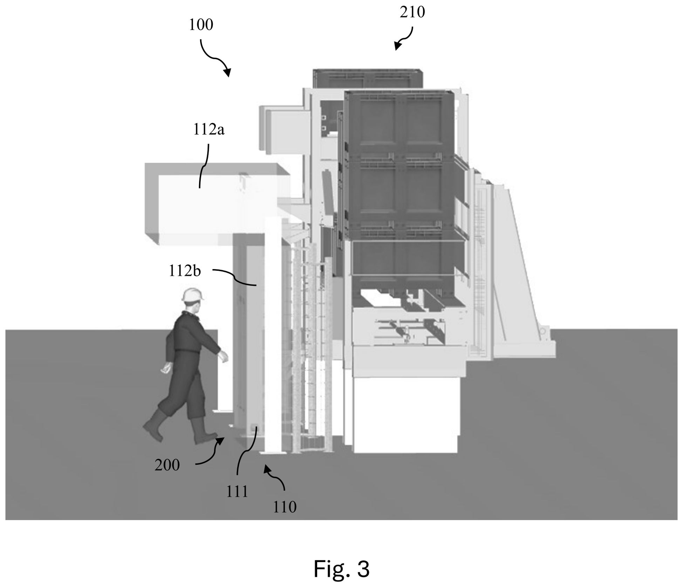

In another embodiment, shown in Figures 2 and 3, the loading/unloading station 210 is a loading/unloading station for a vehicle 300 such as a forklift. In the illustrated example, the opening 200 is not an opening in a wall, but an opening between two columns, spaced apart by a distance substantially equal to the width of the forklift. On the other hand, in this case the opening 200 is not delimited at the top.

The system 100 comprises a radar system 110, which is disposed at the opening 200. The radar system 110 may include one or more radar devices 111. In the illustrated embodiments, the radar system 110 comprises a single radar device 111.

In some embodiments, as in Figure 1, at least one radar device 111 is located on a top portion of the opening 200, for example mounted to a beam that delimits the opening 200 at the top. In some embodiments, as in Figures 2 and 3, at least one radar device 111 is located on a floor that delimits the opening 200 at the bottom, or in any case on a support at floor level. However, embodiments are not excluded in which a radar device 111 is mounted on a lateral upright of the opening 200 or on other supports independent of the opening 200, close to the opening 200.

The radar system 110 is configured to monitor for the presence of targets in two detection regions 112a, 112b in an area in front of the opening 200, as in Figure 1, or within the opening 200, as at least in part in Figures 2 and 3. Preferably, a single radar device 111 is configured to simultaneously monitor both regions 112a, 112b.

Preferably, the radar system 110 is a volumetric radar system, configured to determine three spatial coordinates of each target. The coordinates may for example be a distance from a radar device 111 (radius), an azimuth angle and an elevation angle.

Still preferably, the two detection regions 112a, 112b are in the form of cuboids, i.e., parallelepipeds.

Each detection region 112a, 112b is bounded by a plurality of boundary areas or virtual surfaces that separate the interior of the detection region 112a, 112b, where the targets are detected and considered for control logic purposes, from the exterior of the detection region 112a, 112b, where the targets are not detected, or are ignored. In the case of parallelepipeds, for example, there are six boundary areas, i.e., a front boundary area, distal from the opening 200 in front of the opening 200, a rear boundary area, which may be proximal to the opening 200 or posterior to the opening 200, an upper boundary area, distal from the floor, a lower boundary area, proximal to the floor, and two lateral boundary areas.

The two regions 112a, 112b are an upper region 112a and a lower region 112b. The upper region 112a is at a height such as not to be invaded by a human target standing on the floor. This is important because, as will emerge from the control logic described below, whether or not the upper region 112a is invaded is information that allows the system to assume whether or not the target is human. Preferably, the position of the upper region 112a is such as not to be invaded by a human target with a certain margin of safety, avoiding for example being impinged on when a human target raises an arm.

Thus, preferably the upper region 112a is entirely above a height of at least 2.5 m, preferably at least 3 m. In other words, the lower boundary area of the upper region is at least at a height of 2.5 m, for example 3 m.

Instead, the upper region 112a is located at a height above the floor such that it can be accessed by a freight vehicle 300, such as a truck, a truck trailer, and/or a forklift. It is common for these vehicles 300 to have parts that reach a height greater than three meters from the floor. Therefore, it is preferable that the lower boundary area is at a height of not more than 3.5 m.

The lower region 112b comprises at least a main portion located below the upper region 112a, which therefore extends between the upper region 112a and the floor. Preferably, the main portion occupies substantially the entire height between the upper region 112a and the floor. The main portion therefore extends to a height such as to be invaded by a human target standing on the floor.

In preferred embodiments, the lower region 112b is separate from the upper region 112a. For example, the lower region 112b may coincide with its main portion. Further, preferably there is no free space between the upper region 112a and the lower region 112b, i.e. the lower boundary area of the upper region 112a at least partially overlaps the upper boundary area of the lower region 112b.

However, the operating logic described below, in its simplest form, could also operate with a partial interpenetration between the lower region 112b and the upper region 112a, as long as the upper region 112a cannot be invaded by a human target standing on the floor.

The two detection regions 112a, 112b may have the same shape and size in plan. Even if they do not have the same shape in plan view, for the purposes of the logic that will be described, it is preferable that the front boundary area of the lower region 112b be positioned at a distance from the opening 200, in an entrance direction to the opening 200, which is less than or equal to the distance, again in the entrance direction, between the opening 200 and the front boundary area of the upper region 112a. Thus, it is envisaged that a target approaching the opening 200, which is of sufficient height to invade the upper region 112a, does not invade the lower region 112b prior to the upper region 112a.

'Entrance direction' means a direction transversal to the opening 200, preferably perpendicular to the opening 200, along which the vehicles 300 are expected to approach the opening 200.

The radar system 110 is configured to generate in output a status signal, indicating the presence or absence of targets in each of the two detection regions 112a, 112b. The status signal then includes a set of Boolean logic variables, wherein a first logic variable may assume two values corresponding, respectively, to the presence and absence of targets detected in the upper region 112a, and a second logic variable may assume two values corresponding, respectively, to the presence and absence of targets detected in the lower region 112b.

A processing system (not illustrated) is in signal communication with the radar system 110 to receive the status signal. The processing system may also be in signal communication with one or more visual and/or audible alarm devices, and may also be in signal communication with one or more automatic handling members of the loading/unloading station 210.

The processing system is configured to generate (or not) an opening alarm based on the status signal, i.e. the presence or absence of targets in the first and second regions 112a, 112b, and possibly the temporal order in which a target is detected in the first and second regions 112a, 112b.

The opening alarm may be understood as a signal, in particular a Boolean variable assuming a predetermined value, which the processing system outputs to another device. The opening alarm indicates that a detected target is not authorized to access the opening 200. Thus, the variable of interest may assume a first value corresponding to the presence of an alarm and a second value corresponding to the absence of an alarm.

If the device receiving the opening alarm is a visual and/or audible alarm device, the opening alarm may result in a visual and/or audible alarm. If the device receiving the opening alarm is a control system of an automatic handling member of the station 210, the opening alarm may result in a change in behaviour of the handling member, for example a slowdown, a stop, or a movement to a safety position.

In particular, the processing system is configured to generate the opening alarm upon detection of a target in the lower region only 112b. Thus, the opening alarm is triggered by a status signal that simultaneously indicates the absence of targets in the upper region 112a and the presence of targets in the lower region 112b. This could in fact be a human target approaching the opening 200, and thus a hazardous condition occurs.

Instead, the processing system is configured to inhibit generation of the opening alarm, if no previous opening alarms were already active, upon detection of a target in the upper region 112a. Thus, the opening alarm is not triggered by a status signal simultaneously indicating the presence of a target in the upper region 112a and the absence of a target in the lower region 112b, nor by a status signal simultaneously indicating the presence of a target in both the upper region 112a and the lower region 112b. In fact, it is assumed that a target that invades the upper region 112a cannot be a human target, and therefore is a target authorized to access the opening as a vehicle for the transport of cargo 300.

Thus, a target that invades first the upper region 112a, and then the lower region 112b, does not trigger the opening alarm. This also applies for a target simultaneously invading the upper and lower region 112a, 112b. Preferably, in order to correctly evaluate situations in which the simultaneity is not perfect, the opening alarm is generated only if the target condition present in the lower region 112b alone remains at least for a predetermined threshold time, preferably less than one second.

For this reason, as anticipated, the front boundary areas of the upper and lower regions 112a, 112b may be equidistant from the opening 200. In this way, it is assumed that a freight vehicle 300 invades the upper and lower regions 112a, 112b substantially simultaneously. Alternatively, the front boundary area of the upper region 112a may be a greater distance from the opening 200 than the front boundary area of the lower region 112b. In this way, it is assumed that a freight vehicle 300 first invades the upper region 112a and then the lower region 112b.

Preferably, in embodiments in which the radar system 110 is located at floor level, as in Figures 2 and 3, the front boundary areas of the upper and lower regions 112a, 112b are not equidistant from the opening 200. Indeed, in these embodiments a target simultaneously invading the two regions 112a, 112b could cast signal shadows towards the upper region 112a, and thus be accidentally detected only in the lower region 112b, triggering an unwarranted opening alarm. This does not occur by setting the front boundary area of the upper region 112a at a greater distance from the opening 200 than the front boundary area of the lower region 112b, for a sufficient difference in distances.

Conversely, if the radar system 110 is located on a top portion of the opening 200, the front boundary area of the upper region 112a can be set at a distance from the opening 200 greater than or equal to the front boundary area of the lower region 112b.

It is clear that a person skilled in the art will be able to make numerous equivalent modifications to the variants set forth above, without thereby departing from the scope of protection as defined by the appended claims.

## Claims

1. Method for monitoring an opening (200) for freight vehicles (300), comprising:
- arranging a radar system (110) at an opening (200) for access to a cargo loading/unloading station (210) by a freight vehicle (300),
- monitoring, by means of the radar system (110), two detection regions (112a, 112b) in an area in front of the opening (200) or within the opening (200), which are an upper region (112a), which is at a height such as not to be invaded by a human target standing on a floor, and a lower region (112b), which comprises at least a main portion located below the upper region (112a),
- upon detection of a target in the lower region only (112b), generating an opening alarm indicating that the target is not authorized to access the opening (200),
- upon detection of a target in the upper region (112a), inhibiting generation of the opening alarm, such that it's not generated even upon detecting a target in the lower region ( 112b).

2. Method according to claim 1, wherein the lower region (112b) is disjoined from the upper region (112a) and extends between the upper region (112a) and the floor.

3. Method according to claim 1 or 2, wherein the upper region (112a) is at a height such as to be invaded by a freight vehicle (300), in particular a truck, a trailer of a truck, and/or a forklift, preferably above a height of at least 2.5 m.

4. Method according to any one of claims 1 to 3, wherein the two detection regions (112a, 112b) have respective front boundary areas distal from the opening (200) and in front of the opening (200), wherein a distance from the opening (200), in a direction of entrance to the opening (200), for the front boundary area of the lower region (112b) is less than, or equal to, a distance from the opening (200), in the entrance direction, for the front boundary area of the upper region (112a).

5. Method according to claim 4, wherein the radar system (110) is located on a top portion of the opening (200), and the distance from the opening (200), in the entrance direction, for the front boundary area of the lower region (112b) is substantially equal to the distance from the opening (200), in the entrance direction, for the front boundary area of the upper region (112a).

6. Method according to claim 4, wherein the radar system (110) is substantially at floor level, and the distance from the opening (200), in the entrance direction, for the front boundary area of the lower region (112b) is less than the distance from the opening (200), in the entrance direction, for the front boundary area of the upper region (112a).

7. Method according to any one of claims 1 to 6, wherein the radar system (110) is a volumetric radar system (110), and the two detection regions (112a, 112b) are in the form of parallelepipeds.

8. Method according to any one of claims 1 to 7, wherein the radar system (110) comprises a single radar device configured to simultaneously monitor the two detection regions (112a, 112b).

9. System (100) for monitoring an opening (200) for cargo loading/unloading (210), comprising:
- a radar system (110) adapted to be arranged at an opening (200) for access to a cargo loading/unloading station (210) by a freight vehicle (300),
wherein the radar system (110) is configured to monitor two detection regions (112a, 112b) in an area in front of the opening (200) or within the opening (200), which are an upper region (112a), which is at a height such as not to be invaded by a human target standing on a floor, and a lower region (112b), which comprises at least a main portion located below the upper region (112a),
wherein the radar system (110) is configured to generate in output a status signal, indicating the presence or absence of targets in each of the two detection regions (112a, 112b),
- a processing system in signal communication with the radar system (110) for receiving the status signal, the processing system being configured to:
- generate an opening alarm indicating that a target is not authorized to access the opening (200), upon detection of a target in the lower region only (112b), and
- inhibit the generation of the opening alarm, upon detection of a target in the upper region (112a), such that it's not generated even upon detecting a target in the lower region (112b).
